# EUROPÄISCHE PATENTSCHRIFT

(11) **EP 2 805 147 B1**
(45) Veröffentlichungstag und Bekanntmachung des Hinweises auf die Patenterteilung: **16.05.2018**
(21) Anmeldenummer: 13700678.9
(22) Anmeldetag: 14.01.2013
(51) Int. Cl.: G01N 21/27, G01N 21/47

(54) **VORRICHTUNG ZUM KALIBRIEREN EINES STREULICHTMESSGERÄTES**
DEVICE FOR CALIBRATING A SCATTEROMETER
DISPOSITIF D'ÉTALONNAGE D'UN DIFFUSOMÈTRE

(30) Priorität: 19.01.2012 DE 102012200739
(43) Veröffentlichungstag der Anmeldung: 26.11.2014
(73) Patentinhaber: Robert Bosch GmbH, 70442 Stuttgart (DE)
(72) Erfinder: STENGEL, Karl, 73779 Deizisau (DE); MATTEUCCI, Andrea, 73728 Esslingen (DE); HAAGA, Gerhard, 73275 Ohmden (DE); NEUENDORF, Michael, 73207 Plochingen (DE); HOSS, Reinhard, 73207 Plochingen (DE); STRACK, Daniel, 73066 Uhingen (DE)
(86) Internationale Anmeldenummer: PCT/EP2013/050531
(87) Internationale Veröffentlichungsnummer: WO 2013/107702

(56) Entgegenhaltungen:
- DE-A1-102010 002 423
- FR-A1- 2 858 851
- US-A- 4 761 552
- US-B1- 7 659 980

## Beschreibung

Die Erfindung betrifft eine Vorrichtung zum Kalibrieren eines Streulichtmessgerätes nach dem Oberbegriff des Anspruchs 1.

### Stand der Technik

Die Verwendung von Streulichtverfahren zur Messung der Konzentration von Partikeln in Gasen und von anderen Kolloiden in Dispersionsmedien ist im Stand der Technik bekannt.

Aus DE 10 2010 002 423 A1 geht ein derartiges Streulichtmessgerät hervor, bei dem eine lichtstarke Lichtquelle einen Lichtstrahl in eine Messkammer richtet, in welcher sich das zu messende Gas- bzw. Kolloid befindet. Der Messkammer sind zwei Lichtsensoren zugeordnet, die das Licht, das an den im Gas vorhandenen Partikel gestreut wird, detektieren. Um die ordnungsgemäße Funktion eines solchen Streulichtmessgerätes zu prüfen bzw. ein solches Streulichtmessgerät zu kalibrieren ist es erforderlich, in der Messkammer einen definierten Zustand einzustellen, bei dem der Lichtstrahl der Lichtquelle ein Streulicht mit definierter Intensität und Verteilung abgibt.

Dazu ist aus DE 10 2010 002 423 A1 bekannt, eine Kalibriervorrichtung vorzusehen, bei der in die Messkammer ein Streukörper eingesetzt wird, der bei Bestrahlung mit dem Licht der Lichtquelle ein Streulicht mit definierter Intensität und Verteilung abgibt, welches von den beiden Lichtsensoren erfasst wird. Die Kalibriervorrichtung soll dabei in der Lage sein, unterschiedliche Konzentrationen von Partikeln im Abgas nachzubilden. Es besteht die Forderung, mit der Kalibriervorrichtung Abgaswerte mit unterschiedlichen Partikelkonzentrationen nachzubilden. Der Streukörper besteht dabei aus einem transparenten Trägermaterial, das definierte Streulichteigenschaften aufweist. Zusätzlich ist an der Austrittsseite des Streulichts in Richtung der Lichtsensoren und/oder an der Eintrittsseite des Lichtstrahls in den Streukörper eine getönte Schicht oder ein Grauglasfilter zur Dämpfung der Streustrahlung bzw. zur Dämpfung der Lichtleistung vorgesehen.

Trifft bei der beschriebenen Kalibriervorrichtung der als Lichtquelle verwendete Laserstrahl auf den Streukörper werden ca. 3% des Lichts jeweils an der Eintrittsseite und Austrittsseite diffus gestreut. Diese diffuse Streustrahlung ist als leuchtender Spot (Speckle-Muster) auf dem Streukörper sichtbar. Der leuchtende Spot überlagert sich störend mit der Streustrahlung, die an den Streuzentren im Streukörper entstehen, so dass die Lichtsensoren die Sättigung erreichen, weil die Lichtmenge, die auf sie fällt, zu groß ist.

Die Druckschriften US7,659,980 B1, US 4,761,552 und FR 2858851 offenbaren jeweils für die Kalibrierung von Streulichtmessgeräten geeignete Streukörper. Aufgabe der vorliegenden Erfindung ist es, den Einfluss der diffusen Streustrahlung auf die von den Lichtsensoren erfasste Streustrahlung zu verhindern.

### Offenbarung der Erfindung

Die erfindungsgemäße Kalibriervorrichtung mit den kennzeichnenden Merkmalen des Anspruchs 1 hat den Vorteil, dass die am Streukörper erzeugte diffuse Streustrahlung in ihrer Wirkung auf den mindestens einen Lichtsensor reduziert wird. Dadurch wird die an der Eintrittsseite und der Austrittsseite des Streukörpers auftretende diffuse Streustrahlung, die einen leuchtenden Spot (Speckle-Muster) erzeugt, aus der zur Kalibrierung der Lichtsensoren eingesetzten, kalibrierenden Streustrahlung weitestgehend ausgeblendet. Dadurch ist es weiterhin möglich, die Intensität des vom Streukörper auf die Lichtsensoren abgestrahlten Streulichts so zu regulieren, dass definierte Lichtintensitäten auf die Lichtsensoren treffen, um das Streulichtmessgerät auf Abgaswerte mit unterschiedlichen Partikelkonzentrationen zu kalibrieren.

Vorteilhafte Weiterbildungen sind durch die Maßnahmen der Unteransprüche möglich.

Zur Ausführung der Kalibriervorrichtung ist ein Träger mit einer Aufnahme für den Streukörper vorgesehen, mit dem der Streukörper in einer definierten Position innerhalb einer Messkammer des Streulichtmessgerätes positionierbar ist. Der Träger ist in Form eines Stiftes ausgeführt, der in eine Öffnung eines Gehäuses des Streulichtmessgerätes einsetzbar ist, so dass der im Stift aufgenommene Streukörper sich innerhalb der Messkammer in einem Strahlengang des Lichtstrahls befindet. Der Stift weist einen Abschnitt zur Befestigung des Blendenkörpers und einen Spalt als Aufnahme für den Streukörper auf, wobei der Stift im Bereich des Strahlenganges des Lichtstrahls eine erste Aussparung für eine Eintrittsöffnung für den Lichtstrahl und eine zweite Aussparung für eine Austrittsöffnung für den Lichtstrahl aufweist.

Der Blendenkörper kann eine einzige Blendenöffnung aufweisen, die in Richtung des mindestens einen Lichtsensors weist; oder aber für jeden Lichtsensor kann jeweils eine Blendenöffnung vorgesehen sein.

Zur weiteren Schwächung der diffusen Streustrahlung ist es zweckmäßig, wenn die Abstrahlfläche am Streukörper zusätzlich mit einer Streuschicht versehen ist. Die Streuschicht kann dabei durch Anschleifen, durch Einbringen von Sägeschnitten in die Abstrahlfläche oder durch Beschichten ausgeführt werden.

### Ausführungsbeispiele

Ein Ausführungsbeispiel der Erfindung sowie ein ähnliches Bespiel zum Vergleich sind in der Zeichnung dargestellt und in der nachfolgenden Beschreibung näher erläutert.

Es zeigen:
- Figur 1: eine Schnittdarstellung durch ein Streulichtmessgerät,
- Figur 2: eine Schnittdarstellung durch das Streulichtmessgerät in Figur 1 nach der Linie II - II mit einer eingesetzten erfindungsgemäßen Kalibriervorrichtung,
- Figur 3: eine schematische Schnittdarstellung durch eine erfindungsgemäße Kalibriervorrichtung gemäß einer ersten Ausführungsform,
- Figur 4: eine schematische Schnittdarstellung durch eine Kalibriervorrichtung gemäß eines vergleichenden Beispiels

- Figur 5: eine perspektivische Ansicht der erfindungsgemäßen Kalibriervorrichtung gemäß Figur 3 und
- Figur 6: eine perspektivische Ansicht der Kalibriervorrichtung in Figur 4.

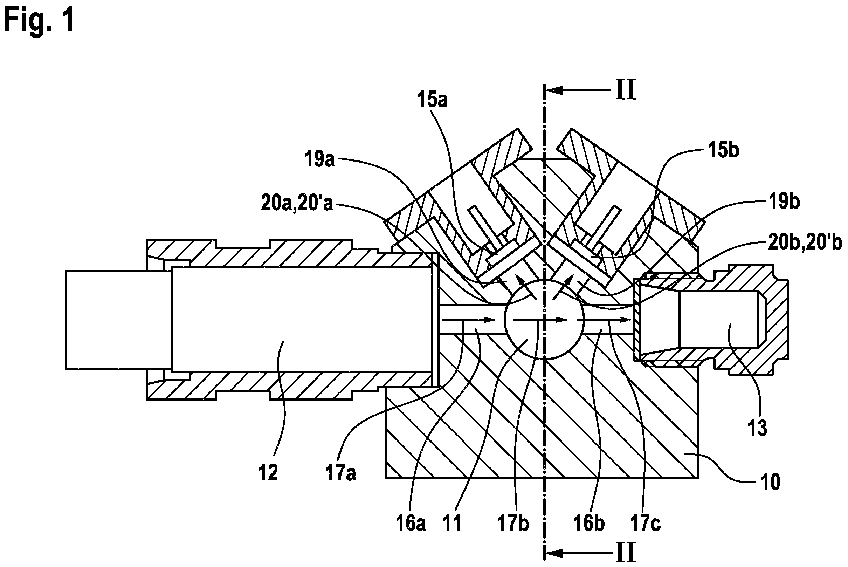

Das in Figur 1 dargestellte Streulichtmessgerät dient zur Messung einer Partikelkonzentration in Gasen oder von Kolloiden in einem Dispersionsmedium, insbesondere in Abgasen von Kraftfahrzeugen. Das Streulichtmessgerät weist eine in einem Gehäuse 10 ausgebildete Messkammer 11, eine Lichtquelle 12, beispielsweise eine Laserlichtquelle, einen Strahlungsabsorber 13 und zwei Lichtsensoren 15a und 15b auf. Von der Lichtquelle 12 führt ein eingangseitiger Strahlkanal 16a in die Messkammer und ein ausgangsseitiger Strahlkanal 16b von der Messkammer 11 zum Strahlungsabsorber 13. Der Strahlungsabsorber 13 dient dazu, nicht gestreutes oder nur teilweises absorbiertes Licht der Lichtquelle 12 vollständig zu absorbieren bzw. zu vernichten.
Die Lichtquelle 12 erzeugt im eingeschalteten Zustand einen Lichtstrahl 17a, vorzugsweise ein Laserlichtstrahl, der mit einer definierten Intensität in die Messkammer 11 eingekoppelt wird und innerhalb der Messkammer 11 als Strahlengang 17b verläuft. Aus der Messkammer 11 tritt der Strahlengang 17b des Lichtstrahles 17a als weiterer Lichtstrahl 17c aus und trifft hinter dem ausgangseitigen Strahlkanal 16b auf den dort angeordneten Strahlungsabsorber 13.

Die beiden Lichtsensoren 15a, 15b sind jeweils über einen Streulichtkanal 19a und 19b der Messkammer 11 ausgesetzt. Über die Streulichtkanäle 19a, 19b wird das in der Messkammer 11 entstehende Streulicht 20a, 20b zu den Lichtsensoren 15a, 15b geleitet. Die Lichtsensoren 15a, 15b sind vorzugsweise in verschiedenen Winkeln in Bezug auf die Strahlrichtung des eingestrahlten Laserstrahls 17a angeordnet, so dass das in der Messkammer 11 gestreute Licht aus verschiedenen Winkeln als Streustrahlung 20a und 20b detektiert wird. Im Messbetrieb wird durch das in der Messkammer 11 befindliche Abgas das Streulicht 20a, 20b erzeugt und von den Lichtsensoren 15a, 15b erfasst. Die von den Lichtsensoren 15a, 15b erzeugten elektrischen Signale werden einer nicht gezeigten Verstärker- und Auswerteeinrichtung zugeführt, welche die Signale auswerten und die Abgaswerte von den durch die Messkammer 11 geleiteten Abgasströme ermitteln und ausgeben.

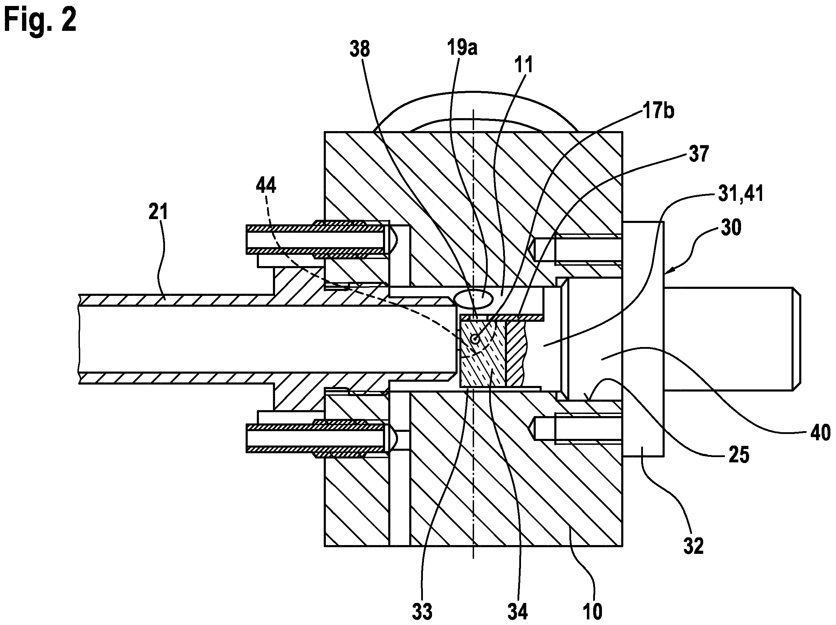

An das Gehäuse 10 des Streulichtmessgerätes ist gemäß Figur 2 ein Einleitungsrohr 21 angeflanscht, über das das Abgas des Kraftfahrzeuges in die Messkammer 11 geleitet wird. An der gegenüberliegenden Seite ist am Gehäuse 10 eine Öffnung 25 ausgebildet, an die im Messbetrieb des Streulichtmessgerätes ein nicht gezeigtes Auslassrohr für das Messgas angeflanscht ist.

Im nachfolgend beschriebenen Kalibrierbetrieb wird das Einleitungsrohr 21 nicht an die Abgasanlage des Fahrzeuges angeschlossen bzw. es wird kein Abgas vom Fahrzeug in die Messkammer 11 eingeleitet. Weiterhin wird im Kalibrierbetrieb anstelle des Auslassrohres eine Kalibriervorrichtung 30 in die Öffnung 25 des Streulichtmessgerätes eingesetzt. Die Kalibriervorrichtung 30 dient dazu, die Lichtsensoren 15a, 15b des Streulichtmessgerätes zu kalibrieren und die Intensität der Lichtquelle 12 zu überwachen sowie eine ggf. eintretende Verschmutzung der Optik von Lichtquelle 12 und/oder der Lichtsensoren 15a, 15b zu detektieren.

Die Kalibriervorrichtung 30 weist einen Träger 31 mit einem Führungsabschnitt 40 und einem Flansch 32 auf, wobei der Träger 31 mittels des Führungsabschnitts 40 in der Öffnung 25 des Streulichtmessgerätes aufgenommen und mittels des Flansches 32 am Gehäuse 10 befestigt ist. Die Kalibriervorrichtung 30 wird durch den Führungsabschnitt 40 reproduzierbar im Gehäuse 10 des Streulichtmessgeräts positioniert. Am Träger 31 ist weiterhin eine Aufnahme 33 zur Aufnahme eines Streukörpers 34 ausgebildet. Der Träger 31 ragt dabei mit dem Streukörper 34 in die Messkammer 11 hinein und ist innerhalb der Messkammer 11 dem Strahlengang 17b des Lichtstrahls 17a ausgesetzt. In Figur 2 ist der Strahlengang 17b als ein aus der Zeichnungsebene heraustretender Strahl dargestellt. Der Streukörper 34 ist aus einem transparenten Trägermaterial ausgeführt, beispielsweise aus einer Glaskeramik, in dem eine definierte Anzahl von Streuzentren angeordnet sind, so dass der Streukörper 34 bei Bestrahlung mit dem Lichtstrahl 17a eine kalibrierende Streustrahlung 20'a und 20'b in Richtung der Lichtsensoren 15a, 15b abstrahlt.

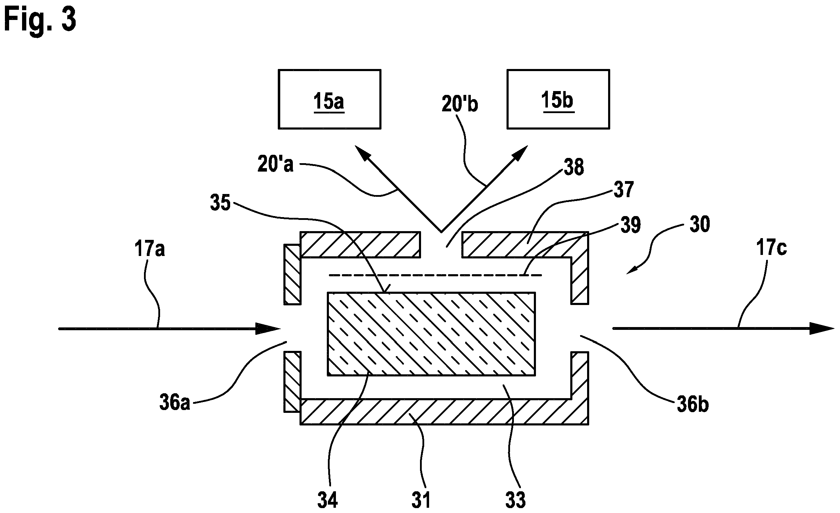

Figur 3 zeigt eine schematische Ausführungsform der Kalibriervorrichtung 30, wobei der Streukörper 34 am Träger 31 in der Aufnahme 33 aufgenommen ist. Im Träger 31 ist eine Eintrittsöffnung 36a für den Lichtstrahl 17a und eine Austrittsöffnung 36b für den Lichtstrahl 17c ausgebildet. Der Streukörper 34 weist zu den beiden Lichtsensoren 15a, 15b hin eine Abstrahlfläche 35 auf, der ein Blendenkörper 37 mit mindestens einer Blendenöffnung 38 zugeordnet ist. Der Blendenkörper 37 ist dabei zwischen der Abstrahlfläche 35 und den Lichtsensoren 15a, 15b positioniert. Der Blendenkörper 37 kann aber auch direkt auf dem Streukörper 34 angeordnet sein. Beim Ausführungsbeispiel gemäß Figur 3 ist eine einzelne Blendenöffnung 38 ausgebildet. Die Blendenöffnung 38 ist so gestaltet und positioniert, dass die Streustrahlung 20'a, 20'b des Streukörpers 34 beide Lichtsensoren 15a, 15b erreicht und dabei mit einer definierten Intensität auf die Lichtsensoren 15a, 15b auftrifft und die störende diffuse Streustrahlung, die beim Eintritt des Lichtstrahls 17a in den Kalibrierkörper 34 und beim Austritt des Lichtstrahls 17c aus dem Kalibrierkörper 34 entsteht, ausblendet.

Zusätzlich können in Strahlrichtung vor und/oder hinter der Blendenöffnung 38 eine oder mehrere Streuscheiben 39 angeordnet sein, durch die die diffuse Streustrahlung (Speckle-Muster), die beim Eintritt des Lichtstrahls 17a in den Streukörper 34 und beim Austritt des Lichtstrahls 17c aus dem Streukörper 34 entsteht, weiter unterdrückt wird. Diese Wirkung kann gleichermaßen durch das Anschleifen, Sägen oder Beschichten des Streukörpers 34 an der zu den Lichtsensoren 15a, 15b weisenden Abstrahlfläche 35 erzeugt werden, indem dadurch an der Abstrahloberfläche 35 des Streukörpers 34 eine zusätzliche Streuschicht in definierter Ausprägung entsteht. Die zusätzliche Streuscheibe 39 kann innerhalb der Aufnahme 33 angeordnet sein.

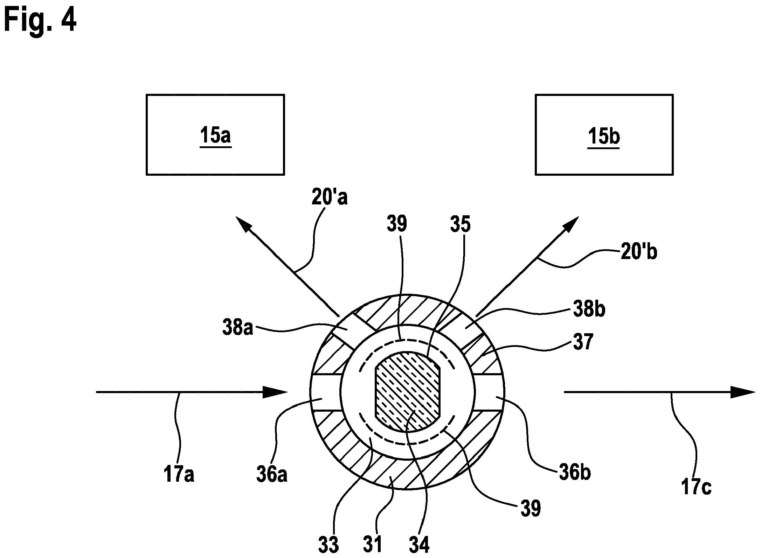

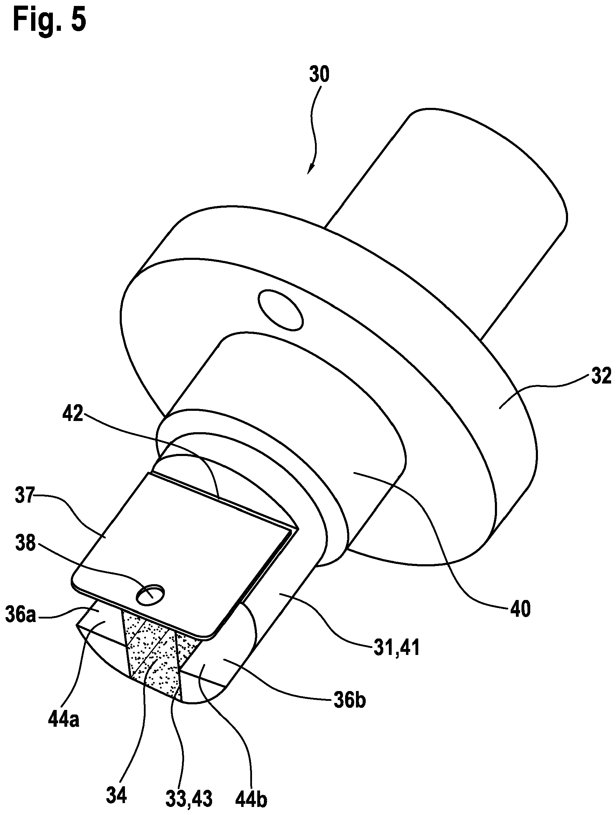

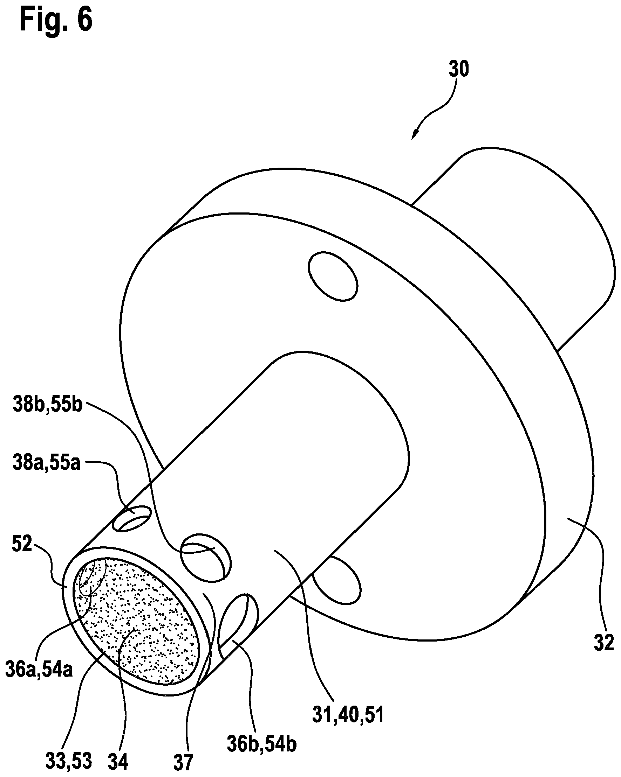

Die Kalibriervorrichtung 30 weist einen Träger 31 in Form eines Stiftes 41 auf, an dessen Außenwand der Führungsabschnitt 40 ausgebildet ist und der mittels des Führungsabschnitts 40 in die Öffnung 25 eingesetzt ist. Der Stift 41 ragt somit in die Messerkammer 11 hinein, derart, dass der am Stift 41 aufgenommene Streukörper 34 sich im Strahlengang 17b des Lichtstrahls 17a befindet. Die in Figur 2 in die Messkammer 11 eingesetzte Kalibriervorrichtung 30 ist in Figur 5 näher dargestellt. Der Träger 31 in Form des Stiftes 41 weist einen Abschnitt 42 mit einer Abflachung zur Befestigung des Blendenkörpers 37, einen Spalt 43 als Aufnahme 33 für den Streukörper 34 sowie eine erste Aussparung 44a zur Ausbildung der Eintrittsöffnung 36a und eine zweite Aussparung 44b zur Ausbildung der Austrittsöffnung 36b auf. Der Streukörper 34 ist dabei in den Spalt 43 eingesetzt. Der Blendenkörper 37 mit der Blendenöffnung 38 ist auf der Abflachung in geeigneter Weise fixiert, wobei die Blendenöffnung 38 so ausgerichtet ist, dass das Streulicht in Richtung der Streulichtkanäle 19a, 19b und dadurch als kalibrierende Streustrahlung 20'a, 20'b zu den Lichtsensoren 15a, 15b geführt wird. Der Blendenkörper 37 ist so am Träger 31 befestigt, dass die Blendenöffnung 38 in Bezug auf die Streulichtkanäle 19a, 19b eine langzeitstabile und ortsfeste Position für die Kalibrierungen beibehält.
Beim vergleichenden Beispiel in Figur 4 ist jedem der beiden Lichtsensoren 15a und 15b jeweils eine Blendenöffnung 38a und 38b zugeordnet. Die Blendenöffnung 38a und 38b ist so gestaltet, dass die Streustrahlung 20'a, 20'b des Streukörpers 34 mit einer definierten Intensität auf die Lichtsensoren 15a, 15b auftrifft und die störende diffuse Streustrahlung, die beim Eintritt des Lichtstrahls 17a in den Streukörper 34 und beim Austritt des Lichtstrahls 17c aus dem Streukörper 34 entsteht, ausblendet. Ein Beispiel dazu geht aus Figur 6 hervor. Dort ist der Träger 31 als Hohlzylinderstift 51 mit einer Zylinderwand 52 und einem innerhalb der Zylinderwand 52 sich ausbildenden Hohlraum 53 ausgeführt, wobei die Zylinderwand 52 den Führungsabschnitt 40 bildet. Der Hohlraum 53 bildet hier die Aufnahme 33 für den Streukörper 34. In Strahlrichtung des Lichtstrahls 17a sind in die Zylinderwand 52 des Hohlzylinderstifts 51 ein erster Durchbruch 54a und ein dem ersten Durchbruch 54a in der Achse des Strahlenganges 17b gegenüberliegender zweiter Durchbruch 54b eingebracht, wobei der erste Durchbruch 54a die Eintrittsöffnung 36a für den Lichtstrahl 17a und der zweite Durchbruch 54b die Austrittsöffnung 36b für den Lichtstahl 17c bildet. An dem zu den Lichtsensoren 15a und 15b weisenden Abschnitt der Zylinderwand 52 ist ein dritter Durchbruch 55a und ein vierter Durchbruch 55b eingebracht, wobei der dritte Durchbruch 55a die Blendenöffnung 38a für den ersten Lichtsensor 15a und der vierte Durchbruch 55b die Blendenöffnung 38b für den zweiten Lichtsensor 15b bildet, so dass die Streustrahlung 20'a, 20'b über die Blendenöffnungen 38a, 38b den Lichtsensoren 15a, 15b zugeleitet werden kann.

Auch bei diesem Beispiel kann zusätzlich zu den Blendenöffnungen 38a, 38b noch eine zusätzliche Streuscheibe 39 zwischen dem Hohlzylinderstift 51 und den Lichtsensoren 15a, 15b angeordnet sein. Es ist auch denkbar, innerhalb des Hohlraums 53 des Hohlzylinderstifts 51, d.h. vor den Blendenöffnungen 38a, 38b die zusätzliche Streuscheibe 39 unterzubringen. Es ist aber auch denkbar, den in den Hohlraum 53 des Hohlzylinderstifts 51 eingesetzten Streukörper 34 zumindest an der zu den Blendenöffnungen 37a und 37b weisenden Außenseite durch Schleifen, Sägen oder Beschichten der Abstrahlfläche 35 mit einer Streuschicht mit definierter Ausprägung zu versehen.

In einem weiteren vergleichenden Beispiel, welches nicht dargestellt ist, wird der Streukörper 34 nicht in einem Hohlraum 53 platziert so wie es in Figur 6 dargestellt ist. Stattdessen bilden die Eintrittsöffnung 36a und Austrittsöffnung 36b die Aufnahme 33 für einen Streukörper 34.

## Patentansprüche

1. Kalibriersystem zur Kalibrierung eines Streulichtmessgeräts, welches zur Messung einer Partikelkonzentration in Abgasen von Kraftfahrzeugen ausgebildet ist, wobei das Kalibriersystem eine Kalibriervorrichtung (30) mit wenigstens einem Streukörper (34) umfasst, wobei der Streukörper (34) bei Bestrahlung mit einem Lichtstrahl (17a) Streulicht (20'a, 20'b) mit einer definierten Intensität und Verteilung abgibt, wobei der Streukörper (34) eine Abstrahlfläche (35) für das Streulicht (20'a, 20'b) aufweist, und das Kalibriersystem weiter mindestens einen im Streulichtmessgerät angeordneten Lichtsensor (15a, 15b) zur Erfassung des an der Abstrahlfläche (35) austretenden Streulichts (20'a, 20'b) umfasst, **dadurch gekennzeichnet, dass** die Kalibriervorrichtung (30) einen Träger (31) mit einer Aufnahme (33) für den Streukörper umfasst, wobei der Träger (31) in Form eines Stiftes (41) ausgeführt ist und einen Führungsabschnitt (40) aufweist, mit dem er in eine Öffnung (25) eines Gehäuses (10) des Streulichtmessgeräts einsetzbar ist, so dass der im Stift (41) aufgenommene Streukörper (34) sich innerhalb der Messkammer (11) in einem Strahlengang (17b) des Lichtstrahls (17a) befindet und die Abstrahlfläche (35) zu dem mindestens einen Lichtsensor (15a, 15b) hinweist, wobei der Stift (41) einen Abschnitt (42) zur Befestigung eines Blendkörpers (37) und einen Spalt (43) als Aufnahme für den Streukörper (34) aufweist, und wobei im Bereich des Strahlenganges des Lichtstrahls (17a) eine erste Aussparung (44a) zur Ausbildung einer Eintrittsöffnung (36a) für den Lichtstrahl (17a) und eine zweite Aussparung (44b) zur Ausbildung einer Austrittsöffnung für den Lichtstrahl (17c) aufweist, wobei der Abstrahlfläche (35) des Streukörpers (34) der Blendenkörper (37) mit mindestens einer Blendenöffnung (38) zugeordnet ist, durch welche das Streulicht (20'a, 20'b) in Richtung des mindestens einem Lichtsensors (15a, 15b) austritt.

2. Kalibriersystem nach einem der vorhergehenden Ansprüche, **dadurch gekennzeichnet, dass** der Blendenkörper (37) einen einzige Blendenöffnung (38) aufweist, die in Richtung des mindestens einem Lichtsensor (15a, 15b) weist.

3. Kalibriersystem) nach einem der Ansprüche 1 bis 2, **dadurch gekennzeichnet, dass** im Blendenkörper (37) für jeden Lichtsensor (15a, 15b) jeweils eine Blendenöffnung (38a, 38b) ausgebildet ist.

4. Kalibriersystem nach Anspruch 1, **dadurch gekennzeichnet, dass** in Strahlrichtung vor und/oder hinter dem Blendenkörper (37) zusätzlich eine Streuscheibe (39) angeordnet ist.

5. Kalibriersystem nach Anspruch 1, **dadurch gekennzeichnet, dass** die Abstrahlfläche (35) am Streukörper (34) zusätzlich mit einer Streuschicht versehen ist.

6. Kalibriersystem nach Anspruch 5, **dadurch gekennzeichnet, dass** die Streuschicht durch Beschichten, Anschleifen oder Einbringen von Sägeschnitten in die Abstrahlfläche (35) gebildet ist.

## Claims

1. Calibration system for calibrating a scatterometer, which is embodied for measuring a particle concentration in exhaust gases of motor vehicles, wherein the calibration system comprises a calibration apparatus (30) having at least one scattering body (34), wherein the scattering body (34), upon being irradiated with a light beam (17a), emits scattered light (20'a, 20'b) at a defined intensity and distribution, wherein the scattering body (34) has an emission surface (35) for the scattered light (20'a, 20'b), and the calibration system furthermore comprises at least one light sensor (15a, 15b), arranged in the scatterometer, for capturing the scattered light (20'a, 20'b) exiting at the emission surface (35), **characterized in that** the calibration apparatus (30) comprises a carrier (31) having a holder (33) for the scattering body, wherein the carrier (31) is embodied in the form of a pin (41) and has a guide section (40) with which it is insertable into an opening (25) of a housing (10) of the scatterometer such that the scattering body (34), which is held in the pin (41), is situated within the measurement chamber (11) in a beam path (17b) of the light beam (17a) and the emission surface (35) faces the at least one light sensor (15a, 15b), wherein the pin (41) has a section (42) for attaching a screen body (37) and a gap (43) as a holder for the scattering body (34), and wherein, in the region of the beam path of the light beam (17a), has a first cutout (44a) for forming an entrance opening (36a) for the light beam (17a) and a second cutout (44b) for forming an exit opening for the light beam (17c), wherein assigned to the emission surface (35) of the scattering body (34) is the screen body (37) having at least one screen opening (38), through which the scattered light (20'a, 20'b) exits in the direction of the at least one light sensor (15a, 15b).

2. Calibration system according to one of the preceding claims, **characterized in that** the screen body (37) has a single screen opening (38), which faces the at least one light sensor (15a, 15b).

3. Calibration system according to one of Claims 1 to 2, **characterized in that** in each case one screen opening (38a, 38b) for each light sensor (15a, 15b) is formed in the screen body (37).

4. Calibration system according to Claim 1, **characterized in that** a diffusion plate (39) is additionally arranged in the beam direction before and/or after the screen body (37).

5. Calibration system according to Claim 1, **characterized in that** the emission surface (35) at the scattering body (34) is additionally provided with a scattering layer.

6. Calibration system according to Claim 5, **characterized in that** the scattering layer is formed by coating, whetting or introducing saw cuts into the emission surface (35).

## Revendications

1. Système d'étalonnage servant à étalonner un appareil de mesure de la diffusion de la lumière configuré pour mesurer la concentration en particules dans les gaz d'échappement de véhicules automobiles, le système d'étalonnage comportant un ensemble d'étalonnage (30) doté d'au moins un corps de diffusion (34),
le corps de diffusion (34) émettant une lumière diffuse (20'a, 20'b) à une intensité et une répartition définies lorsqu'il est irradié par un faisceau lumineux (17a),
le corps de diffusion (34) présentant une surface d'émission (35) de la lumière diffusée (20'a, 20'b) et le système d'étalonnage comportant en outre au moins un capteur de lumière (15a, 15b) disposé dans l'appareil de mesure de la diffusion de lumière et servant à saisir la lumière diffusée (20'a, 20'b) qui sort de la surface d'émission (35),
**caractérisé en ce que**
l'ensemble d'étalonnage (30) comporte un support (31) doté d'un logement (33) pour le corps de diffusion,
**en ce que** le support (31) est réalisé sous la forme d'une tige (41) et présente une partie de guidage (40) par laquelle il peut être inséré dans une ouverture (25) d'un boîtier (10) de l'appareil (34) de mesure de la diffusion de lumière de telle sorte que le corps de diffusion (34) repris dans la tige (41) soit situé dans le parcours (17b) des rayons de lumière (17a) à l'intérieur de la chambre de mesure (11) et que la surface d'émission (35) soit tournée vers le ou les capteurs de lumière (15a, 15b),
**en ce que** la tige (41) présente une partie (42) de fixation d'un corps d'écran (37) et un interstice (43) servant de logement pour le corps de diffusion (34), une première découpe (44a) située au niveau du parcours du faisceau de lumière (17a) présente pour former une ouverture d'entrée (36a) pour le faisceau lumineux (17a) et une deuxième découpe (44b) pour former une ouverture de sortie pour le faisceau lumineux (17c),
**en ce que** le corps d'écran (37) doté d'au moins une ouverture d'écran (38) par laquelle la lumière diffuse (20'a, 20'b) sort en direction du ou des capteurs de lumière (15a, 15b) est associé à la surface d'émission (35) du corps de diffusion (34).

2. Système d'étalonnage selon l'une des revendications précédentes, **caractérisé en ce que** le corps d'écran (37) présente une seule ouverture d'écran (38) orientée en direction du ou des capteurs de lumière (15a, 15b).

3. Système d'étalonnage selon l'une des revendications 1 et 2, **caractérisé en ce qu'**une ouverture d'écran (38a, 38b) est formée dans le corps d'écran (37) pour chaque capteur de lumière (15a, 15b).

4. Système d'étalonnage selon la revendication 1, **caractérisé en ce qu'**un disque de diffusion (39) est de plus disposé dans le parcours des rayons en amont et/ou en aval du corps d'écran (37).

5. Système d'étalonnage selon la revendication 1, **caractérisé en ce que** la surface d'émission (35) prévue sur le corps de diffusion (34) est de plus dotée d'une couche de diffusion.

6. Système d'étalonnage selon la revendication 5, **caractérisé en ce que** la couche de diffusion est formée par revêtement, meulage ou réalisation de découpes sciées dans la surface d'émission (35).
